# DEMANDE DE BREVET EUROPEEN

(11) **EP 0 983 785 A1**
(43) Date de publication de la demande: **08.03.2000**
(21) Numéro de dépôt: 99402169.9
(22) Date de dépôt: 01.09.1999
(51) Int. Cl.: B01D 46/52, B01D 46/44, F24F 3/16, G01M 3/20

(54) **Filtre à air, notamment pour salles blanches**

(30) Priorité: 01.09.1998 FR 9810912
(71) Demandeur: Camfil S.A., 92257 La Garenne Colombes Cedex (FR)
(72) Inventeur: Fievez, Gérerd, 60190 Avrigny (FR)
(74) Mandataire: Colas, Jean-Pierre

(57) **Abrégé**

Ce filtre à air, notamment pour salles blanches, comprend un carter (1) à l'intérieur duquel sont fixés de manière étanche un complexe de filtration (20) et un caisson de test (10) susceptible d'établir une communication de fluide entre les parties aval (14) et amont (15) dudit complexe (20).

Ce filtre à air est remarquable ce que ledit caisson de test (10) est déporté contre une partie latérale (3) dudit carter (1).

Ceci permet de réduire le périmètre de bordure dudit complexe (20), et ainsi d'augmenter sa surface utile de filtration et de limiter les risques de fuites d'air non filtré.

## Description

La présente invention est relative à un filtre à air, notamment pour salles blanches.

On connaît de la technique antérieure des filtres à air pour salles blanches du type comprenant un carter à l'intérieur duquel sont fixés de manière étanche un complexe de filtration et un caisson de test susceptible d'établir une communication de fluide entre les parties aval et amont de ce complexe.

Le caisson de test permet notamment d'envoyer des aérosols en amont du complexe de filtration sans avoir à le démonter, dans le but de mesurer le flux d'aérosols transmis en aval de ce complexe et ainsi d'évaluer son pouvoir filtrant.

Dans ces filtres à air, le caisson de test est typiquement placé sous la prise d'air du carter, c'est-à-dire à une position sensiblement médiane par rapport à la section de ce carter. On peut de la sorte fixer sur le caisson un dispositif de vanne destiné à régler l'ouverture de la prise d'air.

Dans cette disposition, le complexe de filtration comporte en fait deux parties séparées par le caisson de test, et son périmètre de bordure, c'est à dire le périmètre sur lequel s'étendent les zones de liaison de ce complexe avec des organes de support, est important. Ces zones n'étant pas filtrantes, il en résulte une perte non négligeable de capacité de filtration du filtre. En outre, les risques de fuites d'air non filtré sont relativement élevés.

La présente invention a pour but de remédier à ces inconvénients.

On atteint ce but de l'invention, ainsi que d'autres qui apparaîtront à la lecture de la description qui va suivre, avec un filtre à air, notamment pour salles blanches, comprenant un carter à l'intérieur duquel sont fixés de manière étanche un complexe de filtration et un caisson de test susceptible d'établir une communication de fluide entre les parties aval et amont dudit complexe, remarquable en ce que ledit caisson de test est déporté contre une partie latérale dudit carter.

Suivant d'autres caractéristiques de l'invention:
- une partie dudit carter forme une partie au moins dudit caisson de test,
- ledit carter comprend un capot percé d'une prise d'air et relié de manière étanche à des parois latérales, ledit caisson de test s'étend le long de l'une de ces parois latérales, et ledit complexe de filtration est fixé audit caisson de test et aux autres parois latérales,
- ledit carter comprend quatre parois latérales définissant un volume sensiblement parallélépipédique.

Grâce à ces caractéristiques, on peut réduire le périmètre de bordure du complexe de filtration, et ainsi augmenter sa surface utile de filtration et limiter les risques de fuites d'air non filtré. En outre, on peut envisager de fabriquer le caisson de test d'une seule pièce avec l'une des parois du carter, dans le but de réduire les coûts de production.

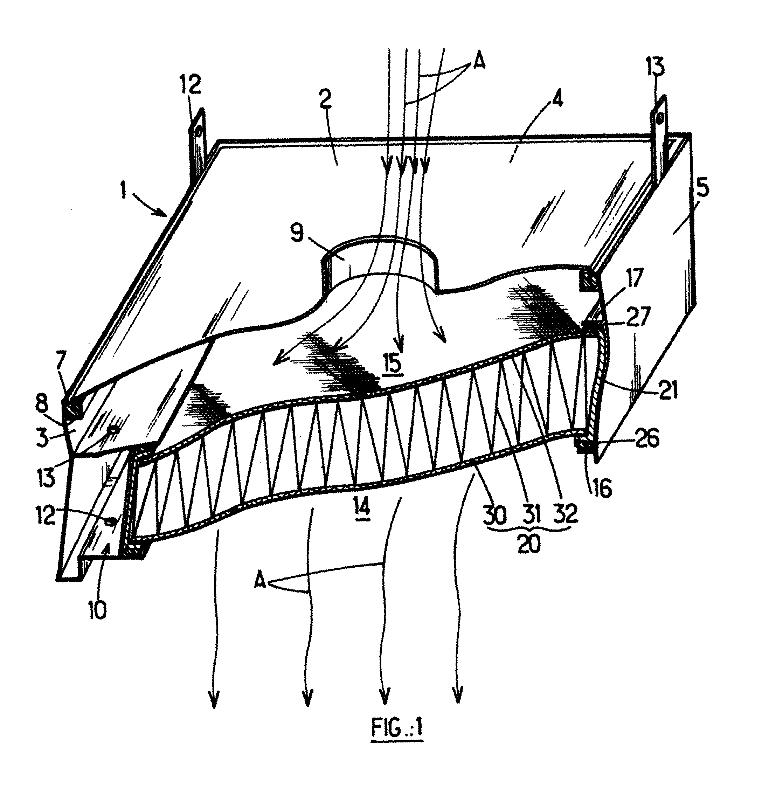

D'autres caractéristiques et avantages de l'invention apparaîtront à la lecture de la description qui va suivre et à l'examen du dessin annexé, dans lequel la figure 1 représente une vue en perspective arrachée d'un filtre à air selon l'invention.

Dans ce qui suit, on utilisera les termes « aval » et « amont » pour localiser certains organes. Ces termes doivent s'entendre par rapport au flux d'air destiné à traverser le filtre, matérialisé par les flèches A de la figure 1.

Comme on peut le voir sur cette figure, le filtre selon l'invention comprend un carter 1 sensiblement parallélépipédique comportant un capot 2 relié de manière étanche à quatre parois latérales, seules trois d'entre elles 3, 4, 5 étant visibles sur la figure 1.

L'étanchéité de cette liaison peut être obtenue, par exemple, avec un joint en polyuréthane 7 s'étendant dans une gouttière 8 formée dans les parois latérales du carter.

Des pattes de fixation 12, 13 solidaires des parois latérales du carter permettent de suspendre le filtre, par exemple au dessus d'un faux plafond.

Le capot 2 est percé sensiblement en son centre d'une prise d'air 9 convenablement profilée afin de réduire le bruit émis par le flux d'air A.

De manière caractéristique selon l'invention, un caisson de test 10 s'étend à l'intérieur du carter 1 sur toute la longueur de l'une 3 de ses parois latérales.

Ce caisson de test définit un volume sensiblement parallélépipédique, et il est de préférence fabriqué d'une seule pièce avec la paroi latérale 3. Ses extrémités (non représentées) sont reliées de manière étanche aux parois latérales adjacentes du carter.

Ce caisson comporte deux orifices 12, 13 obturés en mode de fonctionnement normal, et susceptibles d'établir une communication de fluide entre les parties aval 14 et amont 15 du filtre en mode de test.

Deux épaulements 16, 17 situés en vis-à-vis s'étendent le long du caisson 10 et des faces intérieures des autres parois latérales du carter.

Ces épaulements maintiennent un cadre de support 21 sur lequel est monté un complexe de filtration 20.

Des joints souples 26, 27 permettent de rendre étanche la liaison entre les épaulements 16, 17 et le cadre de support 21.

Le complexe de filtration 20 comprend, de l'aval 14 vers l'amont 15 du filtre, un voile de protection 30 (grille métallique par exemple), un matériau filtrant 31 et un voile de répartition 32 (feuille de non-tissé par exemple). Ces trois éléments sont reliés de manière étanche au cadre de support 21, par exemple grâce à un lut (non représenté).

De manière préférée, l'épaulement 16 situé en aval du filtre est escamotable, de manière à permettre de remplacer le complexe de filtration.

Le principe de fonctionnement et les avantages du filtre à air selon l'invention découlent directement de la description qui précède.

L'air A entre par la prise d'air 9 et passe à travers le complexe de filtration 20.

Le voile de répartition 32 permet d'étaler le flux d'air de façon homogène sur le matériau filtrant 31, et le voile de protection 30 met ce matériau à l'abri des agressions extérieures (chocs...).

Les zones de liaison du complexe de filtration 20 avec le cadre de support 21 ne sont pas filtrantes.

En plaçant le caisson de test 10 sur le côté, on obtient un pan de zone de liaison en moins par rapport à la situation de la technique antérieure où ce caisson occupe une position médiane. On augmente de la sorte la surface utile de filtration du complexe 20, et on limite les risques de fuites d'air non filtré.

Cette disposition permet en outre d'envisager de fabriquer la paroi latérale 3 et le caisson de test 10 d'une seule pièce, par exemple en pliant convenablement un élément de tôle. On peut ainsi s'affranchir de certaines opérations de soudage, et obtenir au moindre coût l'étanchéité recherchée.

Lorsqu'on souhaite tester le pouvoir filtrant du complexe de filtration 20, on procède de la manière suivante.

Le filtre à air étant en fonctionnement, on introduit un aérosol en amont de ce complexe par les orifices 12 et 13 du caisson 10.

Entraînée par le flux d'air A, une partie de cet aérosol traverse le complexe 20. En mesurant le flux d'aérosol en aval du complexe 20, on peut évaluer son pouvoir filtrant afin de décider s'il doit être remplacé ou non.

Dans l'affirmative, on arrête le filtre à air, on escamote l'épaulement 16, on enlève le cadre de support 21 et son complexe 20, on les remplace par un ensemble neuf, on obture les orifices 12, 13 du caisson 10, et on redémarre le filtre à air.

Bien entendu, l'invention n'est pas limitée au mode de réalisation décrit et représenté, qui a été fourni à titre d'exemple illustratif et non limitatif.

C'est ainsi notamment que le carter 1 pourrait avoir une toute autre forme que celle décrite ci-dessus, et comporter par exemple plus de quatre faces latérales et/ou plusieurs prise d'air.

## Revendications

1. Filtre à air, notamment pour salles blanches, comprenant un carter (1) à l'intérieur duquel sont fixés de manière étanche un complexe de filtration (20) et un caisson de test (10) susceptible d'établir une communication de fluide entre les parties aval (14) et amont (15) dudit complexe (20), caractérisé en ce que ledit caisson de test (10) est déporté contre une partie latérale (3) dudit carter (1).

2. Filtre à air selon la revendication 1, caractérisé en ce qu'une partie (3) dudit carter (1) forme une partie au moins dudit caisson de test (10).

3. Filtre à air selon l'une quelconque des revendications 1 ou 2, caractérisé en ce que ledit carter (1) comprend un capot (2) percé d'une prise d'air (9) et relié de manière étanche à des parois latérales (3, 4, 5), en ce que ledit caisson de test (10) s'étend le long de l'une (3) de ces parois latérales, et en ce que ledit complexe de filtration (20) est fixé audit caisson de test (10) et aux autres parois latérales (4, 5).

4. Filtre à air selon la revendication 3, caractérisé en ce que ledit carter (1) comprend quatre parois latérales définissant un volume sensiblement parallélépipédique.
